# EUROPEAN PATENT APPLICATION

(11) **EP 0 736 917 A1**
(43) Date of publication of application: **09.10.1996**
(21) Application number: 96302492.2
(22) Date of filing: 09.04.1996
(51) Int. Cl.: H01M 2/30, H01M 2/34, H01R 11/28

(54) **Battery terminal adaptor**

(30) Priority: 06.04.1995 GB 9507105
(71) Applicant: Exide Batteries Limited, Dagenham, Essex RM9 6PX (GB)
(72) Inventor: Fisher, Leslie Kenneth, Stanford-le-Hope, Essex SS17 8BB (GB)
(74) Representative: James, Michael John Gwynne

(57) **Abstract**

A mounting plate 1 carries an integral terminal lug 3 incorporating a passageway for receipt of a bolt which will hold in place a connector for an electrical cable on a car battery. An adaptor post 5 (Figure 3) is of circular external shape with a slight upward taper and incorporates a recess. This will precisely match the shape of the terminal lug 3. The post 5 can be placed very firmly over the lug 3 so that there will be secure frictional engagement between these parts to hold the post 5 securely in place. This converts the mounting to one with an alternative type of connector for an electrical cable in the form of a sleeve which is clamped over the post 5.

## Description

For batteries for vehicles there are two main types of terminal connector available. One of these is a lug, usually incorporating a hole through which a bolt can be passed to secure a cable. The more usual type of arrangement comprise a circular post onto which a cable connector is clamped. The present invention aims to provide means whereby the terminal on a battery can be modified from one design to the other.

According to the present invention there is provided a battery terminal adaptor comprising a mounting for fitting into a battery and incorporating a terminal lug formed from an electrically conductive material and an adaptor post also formed from an electrically conductive material and of generally circular external cross-section and provided with a recess which opens only at the base and is shaped to be complementary to the external shape of the terminal lug so as to surround the terminal lug with a tight fit when fitted thereon.

Preferably the terminal lug will taper upwardly and the recess in the post will then be formed to have a complementary internal taper. The post may be formed from lead, lead amalgam or another malleable metal. Because the post will totally surround the lug, deformation of the post as a connector is tightened around it will tend to cause the post to grip tightly about the lug and ensure good electrical contact. This will be so even if the post is constricted to some extent to an oval shape.

Ideally the terminal lug mounting will incorporate an integral bushing which will be moulded into the lid of a battery.

It is preferred that the one end of each battery terminal is protected by an electrically insulating material. The insulating material can form an integral part of the lid of the battery.

The invention may be performed in various ways and a preferred embodiment will now be described, by way of example, with reference to the accompanying drawings, in which:-
Figures 1 and 2 are side and end views respectively of a terminal lug mounting for a battery;
Figures 3 to 5 are side, end and underneath views of an adaptor post for attaching to the terminal lug of Figure 1;
Figure 6 is a section through the lid of a battery incorporating the terminal lug of Figures 1 and 2; and
Figure 7 and 8 are plan views of parts of the battery lid shown in Figure 6.

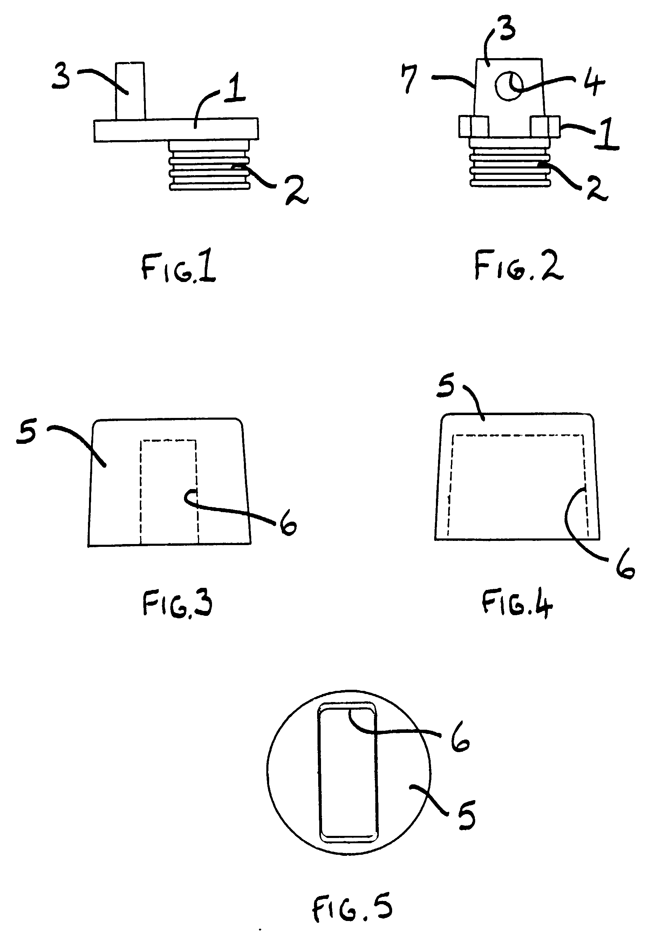

The mounting shown in Figures 1 and 2 comprises a mounting plate 1 from which projects an integral bushing 2 which is formed with the mounting plate. Projecting up from the mounting plate is a terminal lug 3 formed with a passageway 4 for receipt of a bolt which will hold a connector for an electrical cable in place.

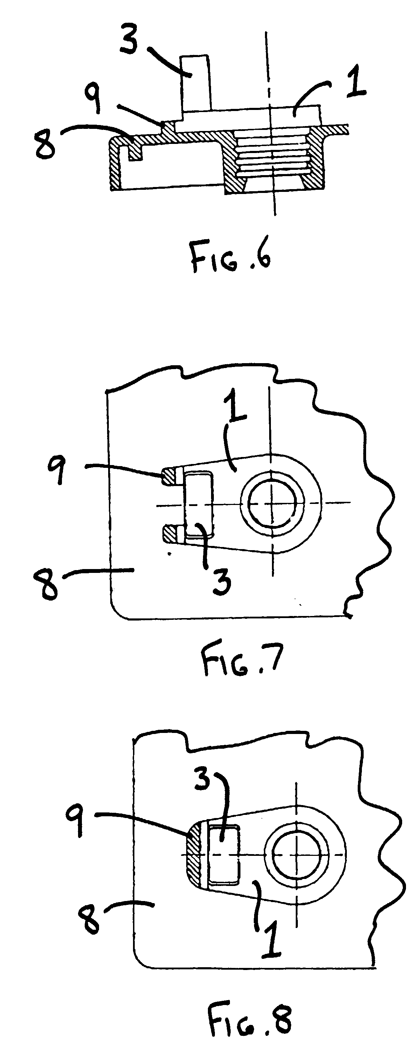

The adaptor post 5 shown in Figures 3 to 5 is of circular cross section but tapers slightly towards the top. Internally the post 5 is formed with a recess 6 which matches precisely the shape of the terminal lug 3. As will be seen the side walls 7 of the lug 4 taper upwardly in a manner similar to the tapering of the post 5.

The mounting shown in Figures 1 and 2, has the terminal lug 3 formed from an electrically conductive material, for example steel. The adaptor post 5 is formed from antimonial lead or other lead-based alloy so as to be electrically conductive and also to enable it to deform slightly when a clamp is placed around the post 5. The post 5 can be placed very firmly over the lug 3 as it is formed to be a very tight fit. There will be frictional engagement between the lug and the post which will intend to hold the post securely in place. Once the post is fitted over the lug 3 it will give the appearance of being an integral part of the mounting, will give a good contact for any connector and will clamp down under pressure.

As shown in Figures 6 to 8 each terminal lug mounting plate 1 (positive in Figure 7 and negative in Figure 8) is moulded into the lid 8 of a battery, the lid being formed from an electrically insulating plastics material. Upstanding portions 9 of the lid locate over the ends of the mounting plates 1, thus providing an insulating barrier to accidental shortening of the two terminals when a metal mounting bar, for holding the battery in place, is located onto the battery.

## Claims

1. A battery terminal adaptor comprising a mounting for fitting into a battery and incorporating a terminal lug formed from an electrically conductive material and an adaptor post also formed from an electrically conductive material and of generally circular external cross-section and provided with a recess opening only at the base and shaped to be complementary to the external shape of the terminal lug so as to surround the terminal lug with a tight fit when fitted thereon.

2. An adaptor according to Claim 1, wherein the terminal lug tapers upwardly and the recess is the post has a complementary internal taper.

3. An adaptor according to Claim 1 or Claim 2, wherein the post is formed from lead, antimonial lead or other lead-based alloy or another malleable electrically conductive metal.

4. An adaptor according to any of Claims 1 to 3 wherein the terminal lug mounting incorporates an integral bushing which will be moulded into the lid of a battery.

5. An adaptor according to any of Claims 1 to 4, wherein one end of each battery terminal is protected by an electrically insulating material.

6. An adaptor according to Claim 5, wherein the insulating material forms an integral part of the lid of the battery.

7. A battery terminal adaptor substantially as herein described with reference to the accompanying drawings.
